(19) Europäisches Patentamt

European Patent Office

Office européen des brevets

(11) **EP 1 058 003 A1**

(12) **EUROPEAN PATENT APPLICATION**
published in accordance with Art. 158(3) EPC

(43) Date of publication:
06.12.2000 Bulletin 2000/49

(21) Application number: 98962141.2

(22) Date of filing: 24.12.1998

(51) Int. Cl.[7]: **F03D 1/00**, F03D 7/04

(86) International application number:
**PCT/BY98/00010**

(87) International publication number:
**WO 99/35395 (15.07.1999 Gazette 1999/28)**

(84) Designated Contracting States:
**AT BE CH CY DE DK ES FI FR GB GR IE IT LI LU MC NL PT SE**

(30) Priority: **30.12.1997 BY 970741**
**30.12.1997 BY 970742**
**04.03.1998 RU 98104389**
**04.03.1998 RU 98104391**

(71) Applicant:
**Aco Foreign Trade and Tourism Joint-Stock Company**
**Taksim, Istanbul 90090 (TR)**

(72) Inventor:
**PASHKOV, Vladimir Anatolievich**
**Minsk, 220109 (BY)**

(74) Representative:
**Patentanwälte Rehberg + Hüppe**
**Postfach 31 62**
**37021 Göttingen (DE)**

(54) **METHOD FOR CONTROLLING THE POWER OF A ROTARY AERO-GENERATOR AND WIND-DRIVEN ROTARY POWER-PLANT**

(57)    The present invention pertains to the field of mechanical engineering and more precisely relates to the construction and production of wind-driven power-plants which can be used in various branches of the industry as well as in industrial power-supply systems. The method of the present invention can be implemented according to the operation mode of the wind-driven power-plant shown in Fig.1, wherein said power-plant includes an aero-generator (1) as well as a wind-driven wheel (2). Said wheel comprises a plurality of conical rotors (3) with end diaphragms (4) as well as motors (5) for the forced rotation of said conical rotors (3) about their longitudinal axis O-O. When receiving a wind-speed signal from a meteorological station, the programmable controller (6) of the power-plant control system (7) generates a signal for controlling a converter (8) of the AC voltage frequency supplying the motors (5) from the actuator (9) of the conical rotors (3). The linear velocity on the side surface (10) of a rotating conical rotor (3) is defined by the relation $v_l. = (3,0... ... ... ... 5,0) v$ of the air flow, wherein said relation was established during the tests.

Fig. 1

## Description

### Engineering field

The invention relates to non-traditional power-engineering, more precisely to technology, construction and production of wind-driven power-plants.

The invention can be used with the greatest success for the conversion of air flows power to the electric, thermal, mechanical power, which can be used in various branches of the industry, for individual needs, as well as in industrial power-supply systems.

### Previous level of engineering

The basis of modern, wind-power ,engineering is formed by paddle (blade)-type wind-driven power plants. The most important disadvantage, limiting workability of the paddle (blade), wind-driven power plants appears to be their small capacity in the regions with continental climate, characterized by high wind speed. The main disadvantages of paddle wind-driven power plants are: low rotational moment of the wind-driven wheel due to small driving force of paddles (blades) at wind speeds 2-6 m/sec; small daily operating time of paddle (blade) wind-driven power plants not more, than 5-8 hours, what reduces power generation - the main performance of wind-driven power plants; insufficient strength of paddies (blades) at storm wind-speeds 25 m/sec. and more; relatively high speed of the wind wheel rotation, in 4-6 times, exceeding wind, speed, what creates discomfort audio-frequencies and increased ecological and operational hazard and reduces the life cycle of wind-driven power plant.

The perspective of modern wind-power engineering is overlooked in the development of technology and devices, based on Magnus forces effect use, which appears on the surface of rotation bodies at their motion in the cross air flow. The use of rotation bodies in the technology of wind-driven power plants production instead of paddles provides increase of the lifting force in comparison with traditional blades and multiple increase of the wind-wheel rotation moment, and also improves efficiency of the wind-driven plant due to the capacity increase.

There's known a method for controlling the power of a rotary aero-generator-of the wind-driven power-plant, according to the speed of the approach air flow by changing rotation speed of the wind-wheel rotor (patent of the USSR $N^o$ 7108, МКИ F03D 1/00-9/00, 1928). The method supposes location of the wind-driven rotor power-plant at the circular rail track and according to the wind direction the rotor wind-driven power plant takes, correspondingly, the position to azimuth.

The famous method is hard to be performed from the technological point of view; it has a small authenticity and low coefficient of the air flow power use (air flow capacity factor).

There is another, more progressive method for controlling the power of a rotary aero-generator, which consists in changing rotation frequency of the forcedly rotated totor with end diaphragms, according to the free air flow velocity, wherein in the process of the method implementation at the rotation of end diaphragms the diameter of end diaphragms is changed due to the rack-and-pinion mechanism and computer (copyright certificate of the USSR $N^o$ 1368230, МКИ F03D 9/02, БИ $N^o$3-1988).

The famous method provides constancy of the lifting force on the wind-wheel rotor.

The disadvantage of the famous method lies in the fact, that it does not provide optimization of the power take-off from the approach air flow and, therefore, reduces opportunities of controlling the optimal power of aero-generator.

There are known wind-driven power plants, which comprise a wind wheel with working rotors in the form of hollow driving cylinders, mounted on the horizontal power take-off shaft and located on the swivel head, hingedly mounted on the hollow support, thus the wind-wheel power take-off shaft is kinematically connected with electric machine engine-generator by means of the differential (application of France $N^o$ 2368618б МКИ F03D 1/00, 1978). In other analogous famous wind-driven power plants the rotors have end diaphragms (USSR patent $N^o$ 10198, МКИ F03D 7/02, 1927).

The known constructions have insufficient reliability and low air flow capacity factor due to the fact, that in wind-driven power plants, according to the application $N^o$ 2368618б, the absence of end diaphragms results in the loss of about 2/3 of the air flow capacity factor, and according to the patent $N^o$ 10198 on the cylindrical rotor generator there's observed a gradient of the air flow pressure, what also results in the reduction of the air flow capacity factor (coefficient).

The more progressive technical decision appears to be the rotary wind-driven power plant, comprising an aero-generator, the wind wheel of which with a horizontal power shaft has radially located rotors with end diaphragms; according to the invention, the cones of rotors are turned by their smaller bases to the power shah, and their bigger bases - to the rotor periphery, and can be implemented in the longitudinal section of the ellipsoid profile (patent of the USSR $N^o$ 4570, МКИ F03D 7/02, 1922).

The disadvantage of the progressive technical decision, as well as famous analogs, is in the low value of the air flow capacity factor due to the non-controlled air flow pressure distribution along the wind-wheel rotor length.

### Invention exposure

The invention is based on the task of the optimal power of rotary aero-generator control by increasing the air flow capacity factor (coefficient) by the rotor.

The current task is solved in the following way: in the method for controlling the power of the wind-wheel aero-generator by changing rotation frequency of the forcedly rotated rotor with the side surface in the form of the rotation body, having end diaphragms, depending on the approach air how velocity, in accordance with the invention, in the process of the wind-wheel rotation the linear velocity of the forcedly rotated rotor is changed, depending on the approach air flow velocity and defined by the following relation: ν 1. = (2,0... ... ... ...5,0) ν of the air flow, wherein

> ν 1. — linear velocity of the side surface of the wind-wheel rotor;
> ν of the air flow — velocity of the approach air flow.

It is technological, that in the method in the process of the rotor rotation the linear velocity of wind-wheel in the zone of its middle diametric section is changed, according to the approach air flow velocity by the following relation:
ν = (1,0... ... ... ... 1,6) ν of the air flow, wherein

> ν — linear velocity of wind-wheel in the zone of its middle diametric section;
> ν of the air flow — velocity of the approach air flow.

Preferably, in the method in the process of the rotor rotation the linear velocity of opposite end sectors of the rotor and the linear velocity of the rotor sector in the zone of its middle diametric section should be equal in absolute value.

It is also technological, that in the method in the process of wind-wheel rotation, the rotation frequency of rotor and rotation frequency of end diaphragms are implemented in the mode of their peripheral velocities mismatch.

It is possible, that in the method in the process of the wind-wheel rotation in the zone of the rotor outer surface conjugation with the end diaphragm the air flow is forcedly formed.

To increase the constructive strength and improve aerodynamics of the wind-driven power-plant the outer perimeter of the wind wheel is damped in the zone of peripheral ends of the rotors axes from the aerodynamic forces, which originate in the wind wheel.

The current task is solved also due to the fact, that in the wind-driven rotary power-plant, which comprises an aero-generator, the wind wheel of which with a power shaft has radially located conical rotors, in accordance with the invention the rotors have end diaphragms, the cones of rotors are turned by the bigger bases to the wind-wheel power shaft, and the smaller bases — to the rotor periphery and are implemented with the cone angle within the limits

$$\alpha = 1{,}5\text{-}5°$$

It is constructive, that in the wind-driven power plants the length of radius of the wind-wheel from the power shaft rotation axis up to the bigger diameter of the conical rotor is linked with the conical rotor length by the following relation:

$$P\kappa = (0{,}6 - 0{,}9)\ Hp,\ \text{wherein}$$

$P\kappa$ — length of a part of the wind-wheel radius
$Hp$ — rotor length.

It is also possible, that in the wind-driven power plant the conical rotor is divided into sectors, at least, by one additional diaphragm seal, located on the body of the conical rotor between end diaphragms.

Preferably, in the wind-driven power plant sectors of the body of the conical rotor (further rotor), divided by the diaphragm seal, have different core angles, the value of which is being reduced from the center of the wind-wheel to the rotor periphery.

For the greatest efficiency, in the wind-driven power plant the rotor sectors must be implemented with the opportunity of the autonomous rotation about the longitudinal axis of the rotor and relatively to each other.

For expansion of the functional opportunities it is necessary, that in the power plant the end diaphragms have a device of autonomous rotation - stop of end diaphragms.

For controlling the gradient of aerodynamic field of the wind wheel it is technological, that in the power plant the rotors have the formers(shapers) of aerodynamic field.

It is also technological, that in the wind-driven power plant the former of the air flow aerodynamic field is located in the conjugation zone of end diaphragms with the rotor outer side surface.

For the shape optimization, in the power-plant the shaper of the air flow aerodynamic field is implemented in the form of the concave rotation body, circumscribed by the curvilinear generatrix on two circular guides.

For the expansion of functional opportunities, in the wind-driven power plants the shaper of the air flow aerodynamic field can have a drive (actuator) of rotation — vibration relatively to the rotor axis of rotation.

In one of the versions, in the wind-driven power plant the rotor surface was implemented with different values of roughness height, the absolute value of which is being increased from periphery to the middle sector of the rotor body.

In another version, in the wind-driven power plant there were implemented end diaphragms of ∫- type profile in the diametric section.

It is efficient, that in the power-plant the diaphragm outer diameter, which is mounted on one of the rotor bases, is conected with the diameter of this base of the rotor by the relation:

D = (1,3... ... ...1,9)d, wherein

D — outer diameter of the diaphragm;
D — diameter of the rotor base

The current task is also solved due to the fact, that in the power-plant the peripheral ends of the rotors axes have a device of the aerodynamic forces, which originate in the wind-wheel, damping.

It is also possible, that in the power-plant the device of the aerodynamic forces damping is implemented in the form of long-length elastic bodies, kinematically linking the peripheral ends of the rotors axes with each other.

## Brief description of drawing figures

For the better understanding of the invention let us consider a concrete sample of its implementation with references to the drawings, wherein:

Fig. 1 — general view of the wind-driven rotary power plant construction;
Fig.2 — version of the rotor, divided into sectors, implementation;
Fig. 3 — version of the rotor with a different value of the roughness on the rotor side surface altitude;
Fig. 4 — version of the rotor implementation with the shaper of the rotor aerodynamic field;
Fig. 5 — rheological picture of the axisymmetric field around the rotor from the approach air flow;
Fig. 6 — section A — A on fig. 3, as a version of the rotor implementation with a different angle of roughness inclination to the rotor side surface;
Fig. 7 — version of the rotor implementation with roughness in the form of shutters;
Fig. 8 — curve of the power-plant power against the relation of the linear velocity of the aero-generator rotor surface to the approach air flow velocity;
Fig. 9 — curve of the power-plant power against the relation of the wind-wheel linear velocity in the zone of its middle diametric section to the approach air flow velocity;
Fig. 10 — dependence of the power-plant power upon the rotor cone angle;
Fig. 11 — dependence of power upon the relation of the wind-wheel radius to the rotor length;
Fig. 12 — version of the wind-wheel implementation, the rotors of which have a damping device;
Fig. 13 — version of the wind-wheel implementation on fig. 12.

## Best versions of the invention implementation

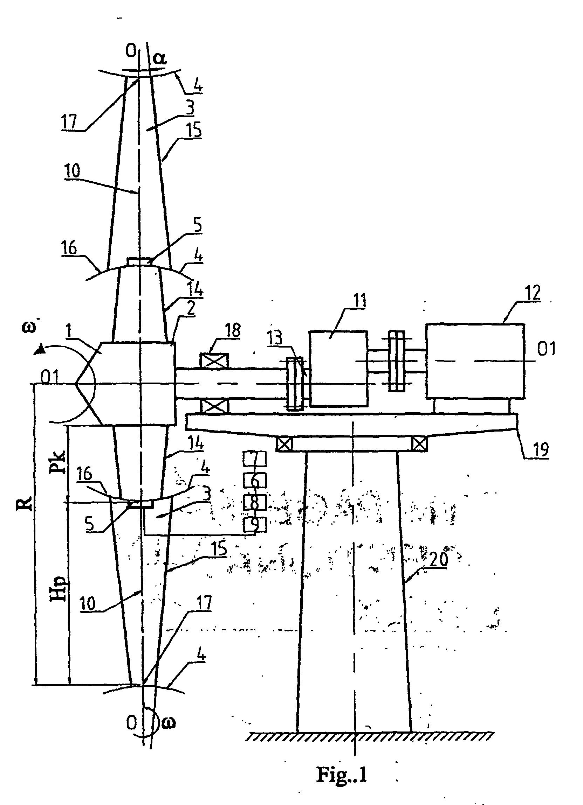

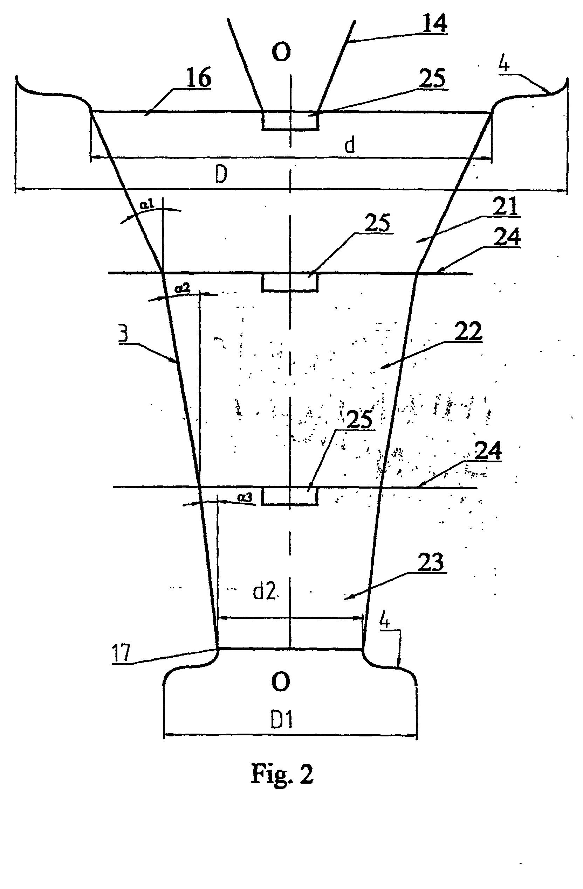

The wind-driven rotary power-plant on fig. 1 comprises an aero-generator 1, a wind-wheel 2, with conical rotors 3 (further rotors 3) with end diaphragms 4, motor 5 for the forced rotation of conical rotors 3 about their longitudinal axis O — O. The wind-driven power plant (fig. 1, fig. 2) has a programmable controller 6 of the power-plant control system (7), a converter 8 of the AC voltage frequency, supplying the actuator 9 of the rotor's 3 motor 5, the aerodynamic cover of which is formed by the side surface 10.

The power-plant system of control 7 through the reducer — multiplier 11 is connected with the asynchronous generator 12, mounted on the horizontal shaft 13 of power take-off.

The radially located, at least, two rotors 3 with end diaphragms 4 are mounted in the wind wheel 2 by means of the radial backup abutments 14. Thus, the cones 15 of rotors 3 are turned by their bigger bases 16 to the horizontal shaft 13 of power take-off, and their smaller bases 17 — to the periphery of the wind-wheel 2 and are implemented with the cone angle $\alpha$ within the limits $\alpha$= 1,5 - 5°. The horizontal shaft 13 of power take-off through the bearing supports 18, the reducer multiplier 11 is kinematically connected with the asynchronous generator 12 of the electric machine.

The aero-generator 1 on fig. 1 by means of the swivel head 19 is mourned on the support 20 with the rotation opportunity in the vane mode. Length of the radius Pк of the wind-wheel 1 from the axis O1 — O1 of the power take-off horizontal shaft 13 rotation up to the bigger base 16 of the conical rotor 3 is connected with the length Hp of the conical rotor 3 by the following relation, established during the tests:

$$P\text{к} = (0{,}6 - 0{,}9)\, Hp, \text{ wherein}$$

Pк — length of the radius R sector of the wind wheel 2;
Hp — length of the conical rotor 3.

The rotor 3 (on fig. 2) is divided into sectors 21, 22, 23, at least by one additional diaphragm seal 24 (on fig. 2 version of the rotor 3 implementation with two diaphragm seals 24), located on the rotor 3 body between end diaphragms 4.

The established during tests relation (on fig. 2) of the outer diameter D of the diaphragm 4, mounted on the bigger base 16 of the rotor 3 with the diameter d of the rotor 3 is in the interval:

D = (1,3... 1,9)d, wherein D — diameter of the diaphragm 4 on the base 16; d — diameter of the base 16.

The dependence between the diameter d2 of the smaller base 17 of the rotor 3 and the outer diameter D1 of the diaphragm 4, mounted on the smaller base 17 of the rotor 3, is analogous:
D1 = (1,3...1,9) d1, wherein

D1 — diameter of the diaphragm 4 on the base 17;
D2 — diameter of the base 17.

Sectors 21, 22, 23 of the rotor 3 body, divided by the diaphragm seal 24, can be implemented with different cone angles $\alpha$1, $\alpha$2, $\alpha$3, the value of which is being reduced from the bigger base 16 to the smaller base 17 in the zone of the rotor 3 periphery. The rotors 3 have actuators 25, rotating the sectors 21, 22, 23 of the rotors 3, wherein the implementation version is possible, where the sectors 21, 22, 23 of the rotor 3 body, separated by the diaphragms 24, can be implemented with the opportunity of autonomous rotation about the longitudinal axis O — O of the rotor 3 and to each other relatively by means of autonomous actuators 25.

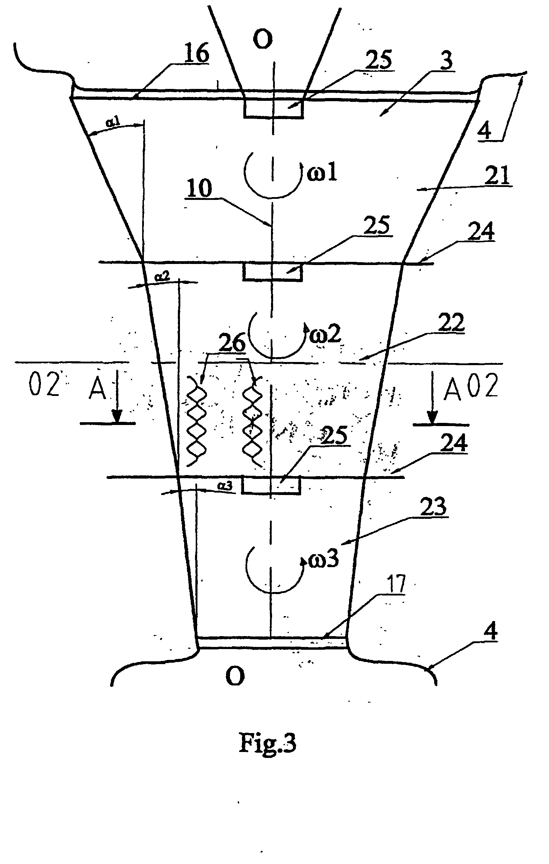

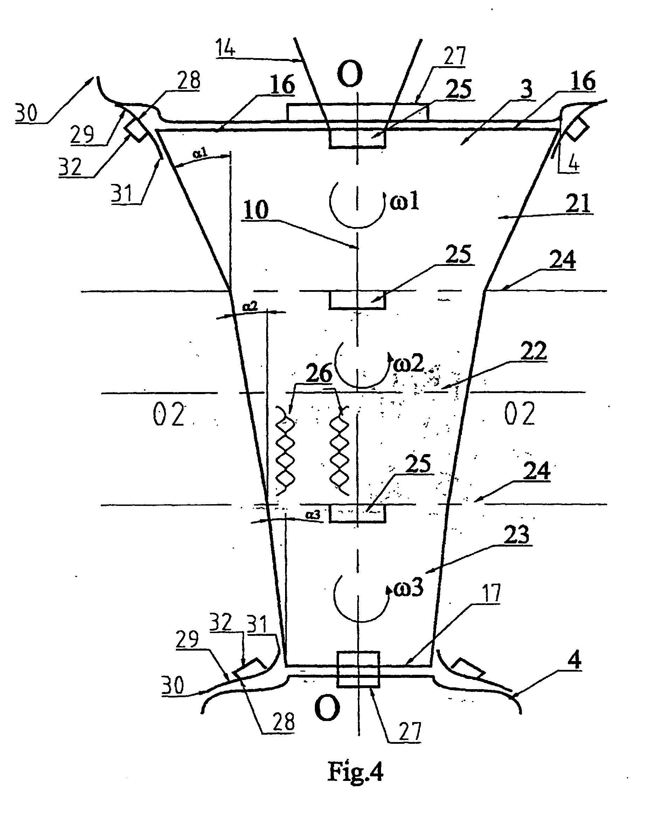

To improve aerodynamic specifications of the rotor 3 (on fig. 3, 4) the side surface 10 of sectors 21, 22, 23 of the rotor 3 is implemented with different values of roughness height 26, the absolute value of which is being increased from periphery of the rotor 3, t.e., correspondingly, from the bigger base 16 and from the smaller base 17 of the rotor 3 to the central sector 01 — 01 of the rotor 3 body. To increase stationarity of the aerodynamic characteristics of the rotor 3 along its side surface 10, the end diaphragms 4 in the diametric section are of the ∫-type profile, smoothly conjugate to the bigger base 16 and the smaller base 17, correspondingly, of the rotor 3 and to the side surface 10 of the rotor 3.

The invention also enables to use the construction of the wind-driven rotary power-plant (fig. 4), in which the end diaphragms 4 have a device of autonomous rotation 27 — stop of end diaphragms 4.

In one of the versions (fig. 4) of the power-plant the rotor 3 comprises, at least, one former 28 of the aerodynamic field, created by the air flow, approaching to the wind wheel 1.

The former 28 (fig. 4) of the aerodynamic field of the air flow can be implemented as a concave rotation body, circumscribed by the curvilinear generatrix 29 on two circular guiding lines 30 and 31, and can comprise an actuator 32 of rotation -vibration relatively to the axis 0 — 0 of the rotor 3 rotation.

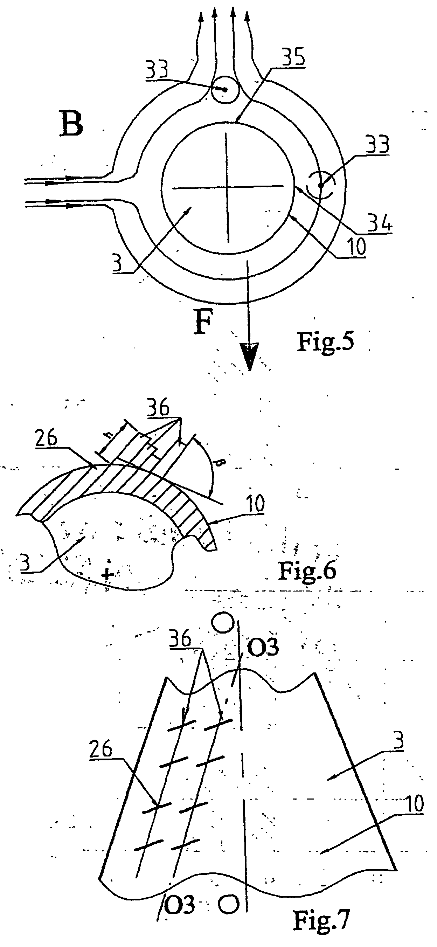

In fig. 5 there is a rheological picture of the axisymmetric field of own air flow, which interacts with the approach air flow, thus the separation point 33 (line drawing) shifts from the back surface 34 of the generatrix of the side surface 10 of the rotor 3 to the cheek 35 of the generatrix of the side surface 10, wherein the point 33 — is a full line. Due to this, there originates a lifting force F of the wind-wheel rotation about its own axis 01 — 01.

In one of the versions (fig. 6, view A-A in fig. 3) of roughness 26 implementation in the middle zone 02 — 02 of the rotor 3 there can be rippled surface with the adjustable height h of scales 36 and the opportunity to change the angle $\beta$ of the scales inclination to the surface tangent to the conical side surface 10 of the rotor 3.

The scales 36 (fig. 7) can be implemented in the form of shutters, with the rotational opportunity, formed by scales 36, shutters, relatively to the axle O3 — O3.

In one of the versions (fig, 12) the wind-wheel 2 is implemented as the system of three, kinematically connected with each other, rotors 3, the axes 0-0 of which are located at the angle of 120° to each other in the plane of the wind-wheel 2 rotation.

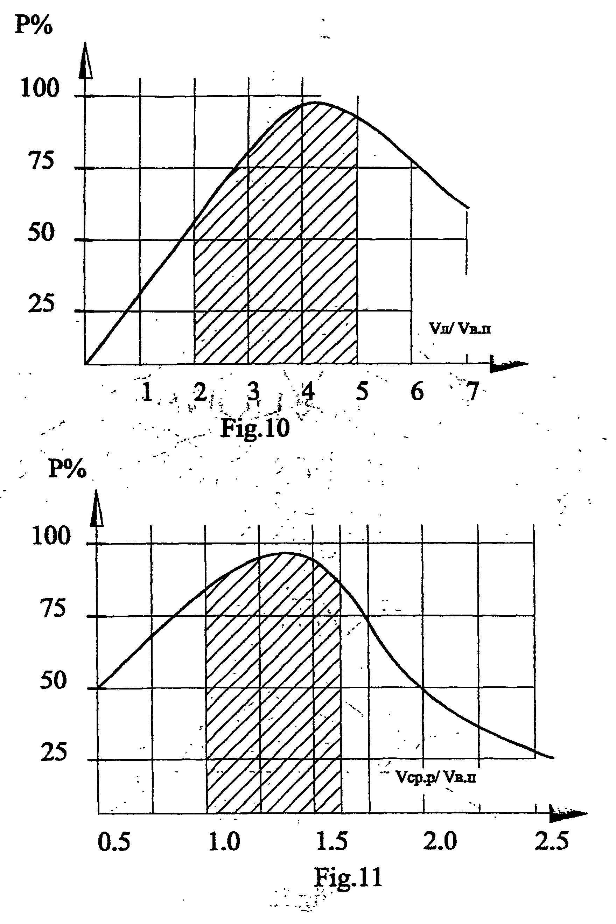

In the fig. 11 there is a fragment (on fig. 10), where the peripheral ends 37 of the axes 0-0 of rotors 3 have a device of the aerodynamic forces, which originate in the wind-wheel 2, damping.

This device is implemented by way of long-length elastic bodies 38, kinematically connecting with each other the peripheral ends 37 of the rotors 3 axes 0-0.

In the invention the wind-driven rotary power plant operates in the following way. In accordance with the meteorological station data they switch actuators 9 of motors 5 of the rotor 3 rotation about its own axis O — O. In accordance with the Magnus effect, around the generator of the side surface 10 of the rotor 3 the axisymmetric field of own air flow interacts with the approach air flow, thus the separation point 33 (fig. 5) shifts from the back surface 34 of the generatrix of the side surface 10 of rotors 3 to the cheek 35 (point 33 — a full line) of the generatrix of the side surface 10 relatively to the approach air flow front. Due to Magnus effect, there originates a lifting force F of the wind-wheel rotation about its own axis 02-02. When the wind wheel 1 reaches the velocity, corresponding to the generating mode of the generator 12, the latter's excitation is switched on, and electric power is generated, which is supplied either to power-supply systems, or directly to the energy consumer.

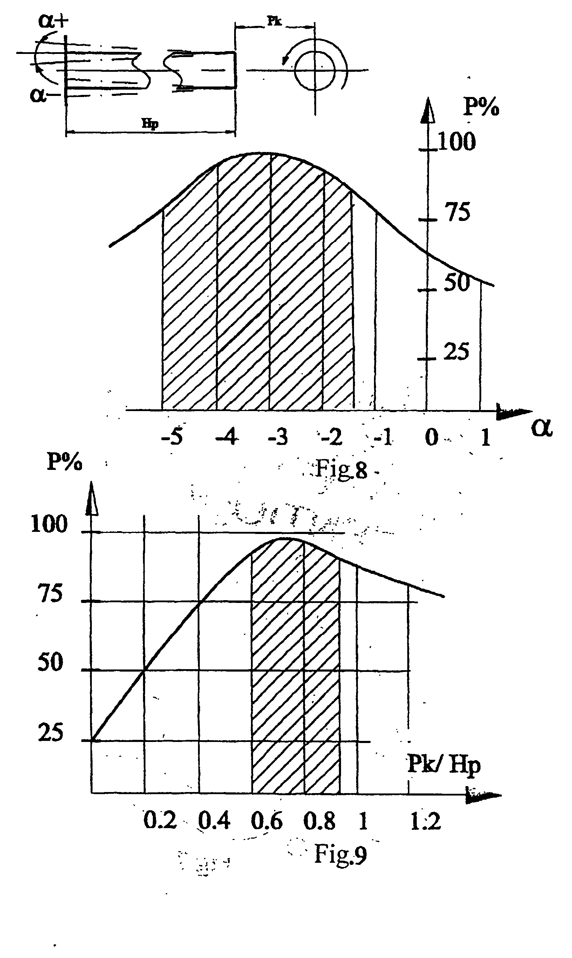

The aerodynamic tests of the present power-plant and others, carried out by the authors, are illustrated by the schemes fig. 8 and, fig, 9, thus it follows, that when designing the wind-driven rotary power plant with conical rotors 5 ($\alpha$=-+_3°) and cylindrical rotors, the power index (P%) has the lowest value for conical rotors 3, turned by their bigger bases 16 to the periphery of the wind-wheel 2 (right part of the scheme relatively to the axis Y at ($\alpha$=+3°).

In comparison with the rotors of cylindrical form ($\alpha$=0°), the construction of conical rotors 3 on the invention ($\alpha$=-3° - left pan of the scheme fig. 8), provides growth of the power index (P%) of more, than 30%.

Comparative tests of the power-plant (fig. 9) of the famous and present constructions of rotors 3 showed, that the optimal value of parameter of the relation - radius P$\kappa$ of the wind-wheel 2 to the length Hp of the rotor 3 - is equal to 0,75 and is in the interval (0,6 —

0.9). Thus, the power index (P%) approaches to 100%.

The use in the rotor 3 construction of the end diaphragms 4 of ∫-type profile in the diametric section, as the actual tests showed, contributes to the elimination of the air flow shift on the ends of the rotor 3 from the higher pressure field to the lower pressure field, and also increases the air flow capacity factor.

Construction of the rotor 3, using additional diaphragm seals 24, in comparison 'with famous constructions enables to stabilize processes of the air flow shift along the generatrix of side surface 10 of the conical rotor 3.

Division of the rotor 3 into the sectors 21; 22, 23 by diaphragm seals 24, using actuators 25 with the opportunity of autonomous rotation of the sectors 21, 22, 23 relatively to each other, provides constancy of the air flow linear velocity in the zone, adjacent to the conical generatixr of the side surface 10 of the rotor's 3 rotation. The rotation of sectors 21, 22, 23 of the rotor 3 with mismatch of peripheral velocities $\omega 1$, $\omega 2$, $\omega 3$ for different radius sectors of the rotor 3 allows to achieve constancy of linear velocities V1 =V3 = V3 = $\omega 1 x R1$= $\omega 2 x R2$ = $\omega 3 x R3$ . Such implementation of the rotor 3 enables to organize on the side surface 10 of the rotor 3 the opportunity to control distribution of the air flow and vary a value of its pressure along the generatrix of the side surface 10 of cone 15 of the rotor 3.

To improve aerodynamic characteristics of the rotor 3 and the wind wheel 2 in general, the side surface 10 of the rotor 3 can be performed with the gradient of roughness height 26 (from the value in microns up to the value in mm).

As one of the versions of roughness 26 performance in the middle zone 01 - 01 of the rotor 3 there can be a rippled surface with the adjustable height of scales 36 and the opportunity to change their angle $\beta$ = 0-180° of inclination to the surface tangent to the rotor 3 conical surface in the direction of the wind-wheel 1 rotation, as well as in the direction, opposite to the rotor 3 rotation. The implementation of roughness 26 of such construction on the rotor 3 surface will also allow to control rotational moment of the wind-wheel 2. The scales 36 can be performed as shutters, with the opportunity to turn their parts relatively to the axis 03-03.

To increase the constructive strength and improve aerodynamics of the wind-driven power plant, the outer perimeter of the wind-wheel 2 is damped in the zone of peripheral ends 37 of the axes 0-0 of rotors 3. Thus, the peripheral ends 37 of axis 0-0 of rotors, 3 are supplied with the device of the aerodynamic forces, which originate in the wind-wheel, damping.

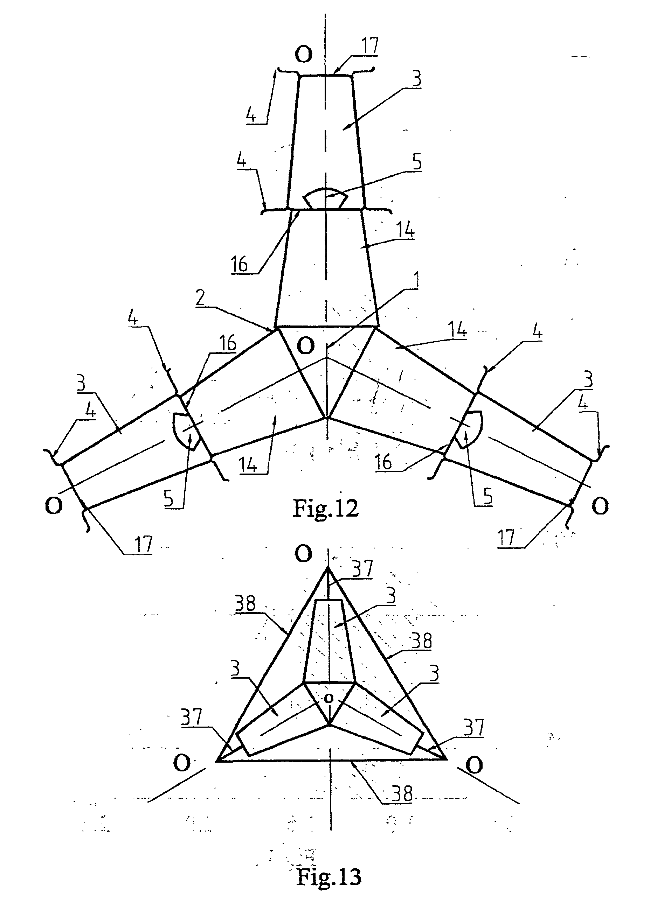

In one of the version (fig. 13) this device is implemented as long-length elastic bodies 38, kinematically connecting with each other peripheral ends 37 of the axis 0-0 of rotors 3.

The version of the power-plant construction (fig. 13) is caused by the fact, that the process of the wind-wheel-2 rotation is accompanied by "end effects", when the surface of air flow, not completely swept by the wind wheel 2, participates in formation of the aero-generator 1 power, what happens along with the reduction of the wind-wheel 2 capacity factor. "End effects", in particular, arise due to the dynamic instability of peripheral ends 37 of axes 0-0 of the rotors 3, what characterizes the process of perturbed motion of the wind-wheel 2 from the equilibrium position. The long-length elastic bodies 38 damp instability of the peripheral ends 37, and dampihg provides dynamic stability of the wind-wheel 2 and contributes to the increase of the wind-wheel 2 capacity factor.

The method is implemented on the sample of the wind-driven rotary power plant work (fig. 1). The programmable controller 6 of the power-plant control system 7, when receiving a wind-speed signal from a meteorological station, generates a signal for controlling a converter 8 of the AC voltage frequency, supplying the motors 5 from the actuator 9 of the rotors 3.

Thus, the linear velocity on the side surface 10 of a rotating rotor 3 is defined by the relation, which was established during the tests: V 1. = (2,0... ... ... ...5,0) V of the air flow, where

> V 1. — linear velocity of side surface 10 of the rotor 3 of the wind-wheel 2
> V of the air flow — velocity of the approach air flow.

It follows from the graphic dependency in fig. 10, established on the basis of comparative tests of the present invention and a famous analog, the power (rod) of the power-plant can be easily adjusted by changing the correlation:

> v 1. = (2,0 ... ... ... ...5,0) v of the air flow, without a complicated technology, which regulates dimensions of the diameter of end diaphragms 4. Thus, the power index —P% in the declared method approaches to 100%, whereas in the famous analog this index is not more, than 50%.

For the mode optimization of the declared method in fig. 2, taking into account data of the meteorological station, the multiplication coefficient of the reducer-multiplier 11 and Working frequency of rotation of the asynchronous generator 12, mounted on the power take-off horizontal shaft 13, are established in the tests in such way, that the asynchronous generator 12 works in nominal conditions at the nominal wind speed.

When wind speed (fig. 11) increases, correspondingly, they increase the braking torque and power of the asynchronous generator 12 up to the value of linear velocity v.1. of rotation in the zone 01 — 01 of the middle diametric section of the wind wheel 2 in the range, according to the graphical dependency:

> V cp. p. = (1,0 ... ... ... ... 1,6) V of the air flow,

thus, the power index —P% at such 'dependency approaches to 100%, what is, comparison with the famous analog, does not requite a complicated technology, regulating dimension of the diameter of end diaphragms 4, wherein the power index P% is not more, than 50%.

The invention also allows to use construction of the power-plant (fig.4), where end diaphragms 4 have a device of autonomous rotation 27 — stop of the end diaphragms 4. Such device enables to control the optimization modes of mismatch of the rotor 3 peripheral velocities and end diaphragms 4.

In one of the versions (fig.4) of the power-plant construction the rotors 3 have the formers 28 of aerodynamic field, created by the wind air flow, approached to the wind-wheel 1. It is technologically important, that in such version the former 28 of aerodynamic field is located in the zone of conjugation of the end diaphragms 4 with the outer side surface 10 of the rotor 3.

In one of the versions of the power-plant construction (fig, 2, 3) the former 28 of the wind flow aerodynamic field lacks, and the end diaphragms 4 can be rigidly attached to the rotor 3.

In another version (fig. 4) the former 28 of the wind flow aerodynamic field can have an actuator 32 of rotation-vibration, relatively to the axes 0-0 of the rotor 3 rotation.

The comparative tests of power-plants of famous and the present (fig. 9) constructions of the rotors 3 showed, that the optimal value of parameter of the correlation $P\kappa$ of the wind wheel 2 to the length Hp of the rotor 3 is equal to 0,75 and is in the interval (0,6 — 0.9). Thus, the power index (P%) approaches to 100%.

The use in the applied construction of the rotor 3 of end diaphragms 4, which are implemented in the diametric sections as a ∫-type profile, as well as implementation (fig. 2) of the rotor 3, wherein the outer diameter D, D1 of the diaphragm 4, mounted on one of the bases 16, 17 of the rotor 3 is connected with the diameter d, d2 of this base of the rotor 3 by the relation: D=(1,3...1,9)d, where

    D—outer diameter of the diaphragm 4;
    d—diameter of the rotor 3 base
    contributes, as the tests showed, to the elimination of the air flow shift on the ends of the rotor 3 from the higher pressure field to the lower pressure field, what is also directed to increasing the air flow capacity factor.

As one of the versions of roughness 26 implementation in the middle zone 01—01 of the rotor 3 there can be a rippled surface with the adjustable height of scales 36 (fig. 6,7) and the opportunity to change their angle β of inclination to the surface tangent to the rotor 3 conical surface in the direction of the wind-wheel 1 rotation, as well as in the direction, opposite to the rotor 3 rotation. The implementation of roughness 26 of such construction on the rotor 3 surface will also allow to control rotational moment of the wind-wheel 2. The scales 36 (fig. 7) can be performed as shutters, with the opportunity to turn their parts (axis 03 — 03 of each part of shutters 36 is parallel to the generatrix of the side surface 10 of the rotor 3) relatively to the conical generatrix of the side surface 10 of the rotor 3.

In the process of the power-plant operation (fig. 4), wherein the end diaphragm 4 have a device of autonomous, rotation 27 — stop of end diaphragms 4, as one of the versions, there can be an operating mode, when at the mismatch of the rotor 3 peripheral velocities and end diaphragms 4, the end diaphragms can be retarded, t.i. their peripheral velocity is equal to zero value. This operating mode enables to reduce power expences on the rotor 3 rotation about its own axis, what improves in general energy balance of the power-plant.

In one of the versions (fig. 4) of the power-plant construction the rotors 3 have formers of the aerodynamic field 28, created by the wind air flow, approaching to the wind-wheel 1. It is technologically important, that the, former 28 of aerodynamic field of the air flow is located in the zone of the end diaphragms 4 conjugation with the rotor 3 outer surface.

The former 28 (fig. 4) of the wind flow aerodynamic field can be implemented in the form of the concave body of rotation, circumscribed by the curved generating line 29 on two circular guides.

In one of the versions of the power-plant construction (fig. 2, 3) the former 28 of the wind flow aerodynamic field lacks, and the end diaphragms 4 can be rigidly fixed to the rotor 3.

In another version (fig. 4) the former 28 of the wind flow aerodynamic field can have an actuator of rotation-vibration 32 relatively to the axis 0 — 0 of the rotor 3 rotation.

The actuator 32 of rotation-vibration allows to control rotation of the former 28 about the axis O — O of the rotor 3, also to control changes of rotation frequency of the aerodynamic field former 28 relatively to the rotation frequency of the end diaphragm 4 and rotation frequency of the rotor 3 itself, and also enables to change the angles of attack in the zone of conjugation of the rotor 3 side surface 10 with the end diaphragm 4. Such version of implementation provides differentiation of the energy balance, consumed for rotation itself of the rotor 3 and in general for rotation of the wind wheel 2.

The actuator 32 of rotation-vibration provides vibrations of the aerodynamic field former 28 relatively to the side surface 10 of the rotor 3, what allows to control "end effects", which originate on periphery of the wind wheel 2 due to the wind flow and, consequently, to improve aerodynamic of the rotor 3. Analysis of the invention features shows, that each of them, taken separately, and all together are directed to the capacity factor increase of the wind flow, swept by the wind-wheel 2.

## Commercial applicability

The wind-driven rotary power-plant is implemented in metal in the actual size and is being tested at present.

The presented method was tested in the aerodynamic tunnel, the stage of industrial approbation is being completed.

## Claims

1. Method for controlling the power of a rotary aerogenerator and wind-driven rotary power-plant, by changing rotation frequency of the rotor in the form of the rotation body, which has end diaphragms, according to velocity of the approach air flow, **differing** by the fact, that in the process of the windwheel rotation the linear velocity of side surface of the forcedly rotated rotor is changed, depending upon velocity of the approach air flow, defined by the relation:

   $\nu\,1. = (2,0...\,...\,...\,...5,0)\,\nu$ of the air flow, wherein

   $\nu\,1.$ — linear velocity of the rotor surface;
   $\nu$ of the air flow — velocity of the approach air flow.

2. Method on the it. 1, **differing** by the fact, that in the process of rotation the linear velocity of wind-wheel in the zone of its middle diametric section is changed, according to velocity of the air flow, defined by tile following relation:

   $\nu = (1,0...\,...\,...\,...1,6)\,\nu$ of the air flow, wherein

   $\nu$ - linear velocity of wind-wheel in the zone of its middle diametric section;
   $\nu$ of the air flow — velocity of the approach air flow.

3. Method on it. 1, 2, **differing** by the fact, that in the rotation process the linear velocity of opposite end sectors of the rotor and linear velocity of the rotor's sector in the zone of its middle diametric section are established equal in absolute value.

4. Method on it. 1, 2, 3, **differing** by the fact, that in the wind-wheel rotation process the rotation frequency of rotor and rotation frequency of its end diaphragms are carried out in the mode of their peripheral velocities mismatch.

5. Method on any it. 1, 2, 3, 4, **differing** by the fact, that in the process of the wind-wheel rotation in the conjugation zone of the rotor outer surface and the end diaphragm, the forced formation of air flow is carried out.

6. Method on any it. 1, 2, 3, 4, 5, **differing** by the fact, that in the process of the wind-wheel rotation the outer perimeter of wind-wheel is damped in the zone of peripheral ends of the rotors axes from aerodynamic forces, which originate in the wind wheel.

7. Wind-driven rotary power-plant, which comprises an aero-generator, the wind wheel of which with the power take-off shaft has radially located conical rotors with the end diaphragms, **differing** by the fact, that the cones of conical rotors are turned by the bigger bases to the power take-off shaft of the wind-wheel, and smaller bases, of the cones of conical rotors — to the periphery of the conical rotor, and are implemented with the cone angle in the limits

   $$\alpha = 1, 5\text{-}5°$$

8. Wind-driven rotary power-plant on it. 7, differing by the fact, that the radius length of the wind-wheel from the rotation axis of the power take-off shaft up to the bigger diameter of the conical rotor is connected with the length of conical rotor by the following relation:

   $$P\kappa = (0,6 - 0,9)\,Hp, \text{ wherein}$$

   $P\kappa$ - length of a sector, of the wind-wheel radius
   $Hp$ — length of the conical rotor

9. Wind-driven rotary power-plant on it. 8, 9, differing by the fact, that the conical rotor is divided into, parts, at least, by one additional diaphragm seal, located on the body of conical rotor between end diaphragms.

10. Wind-driven rotary power-plant on it. 8, 9, 10, differing by the fact, that parts of the conical rotor body, divided by the diaphragm seal, have different cone angles, the value of which is being reduced from the wind-wheel center to periphery of the conical rotor.

11. Wind-driven rotary power-plant on it. 8, 9, 10, differing by the fact, that end diaphragms have a device of autonomous rotation — stop of end diaphragms.

12. Wind-driven rotary power-plant on it. 8, 9, 10, 11, differing by the fact, that conical rotors have the formers of aerodynamic field of the wind flow.

13. Wind-driven rotary power-plant on it. 8, 9, 10, 11, 12, differing by the fact, that the former of aerodynamic field of the wind flow is located in the zone of the end diaphragms conjugation with the rotor outer surface.

14. Wind-driven rotary power-plant on it. 8, 9, 10, 11, 12, 13, differing by the fact, that the former of aerodynamic field of the wind flow is implemented as a concave rotation body, circumscribed by the curved generatrix line on two circular guides.

15. Wind-driven rotary power-plant on it. 8, 9, 10, 11, 12, 13, 14, differing by the fact, that the former of aerodynamic field of the wind flow has an actuator of rotation-vibration relatively to the rotation axis of the rotor.

16. Wind-driven rotary power-plant on it. 8, 9, 10, 11, 12, 13, 14, 15, differing by the fact, that parts of the conical rotor's body are implemented with the opportunity of autonomous rotation about the longitudinal axis of the conical rotor and to each other relatively.

17. Wind-driven rotary power-plant on it. 8, 9, 10, 11, 12, 13, 14, 15, 16, differing by the fact, that the side surface of the conical rotor is implemented with different values of roughness height, the absolute value of which is being increased from periphery to the middle sector of the conical rotor's body.

18. Wind-driven rotary power-plant on it. 8, 9, 10, 11, 12, 13, 14, 15, 16, 17, differing by the fact, that end diaphragms are of the $\int$-type profile in the diametric sections.

19. Wind-driven rotary power-plant on it. 8, 9, 10, 11, 12, 13, 14, 15, 16, 17, 18, differing by the fact, that the rotor have a device of the aerodynamic forces, which originate in the wind-wheel, damping.

20. Wind-driven rotary power-plant on it. 8, 9, 10, 11, 12, 13, 14, 15, 16, 17, 18, 19, differing by the fact, that the outer perimeter of diaphragm, mounted on one of the rotor's bases, is connected with the diameter of this base of the rotor by the relation: D = (1,3... ... 1,9d), wherein

D — outer diameter of the diaphragm;
d — diameter of the rotor base

**Fig..1**

Fig. 2

Fig.3

Fig.4

B

33          35

33

3          34
                10

F          Fig.5

36

26

10

3          Fig.6

36          O3

26          3

10

O3          Fig.7

Fig.8

Fig.9

P%

100

75

50

25

1   2   3   4   5   6   7

$V_\text{п}/V_\text{в.п}$

Fig.10

P%

100

75

50

25

0.5      1.0      1.5      2.0      2.5

$V_\text{ср.р}/V_\text{в.п}$

Fig.11

Fig.12

Fig.13

# INTERNATIONAL SEARCH REPORT

| International application No. |
|---|
| PCT/BY 98/00010 |

**A. CLASSIFICATION OF SUBJECT MATTER**

Ipc.$^6$F03D 1/00, 7/04

According to International Patent Classification (IPC) or to both national classification and IPC

**B. FIELDS SEARCHED**

Minimum documentation searched (classification system followed by classification symbols)

Ipc.$^6$ F03D 1/00, 1/02, 7/00, 7/02, 7/04, 9/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | SU 1373862 A1 (RESPUBLIKANSKOE PROIZVODSTVENNOE OBEDINEN PO TEPLOSNABZHENIJU) 15 February 1988 (15.02.88) | 1-6 |
| A | RU 2075639 C1 (TOVARISCHESTVO S OGRANICHENNOI OTVETSTVENNOSTIJU FIRMA "OBSCHEMASH-INZHINIRING", "NAUCHNO – PROIZVODSTVENNOE OBEDINENIE "VETROEN") 20 March 1997 (20.03.97) | 1 |
| A | SU 1300625 A1 (AZERBAIDZHANSKY NAUCHNO-ISSLEDOVATELSKY INSTITUT ENERGETIKI) 30 March 1987 (30.03.87) | 1 |
| A | SU 1724922 A1 (V.M. SHBYRKUNOV) 7 April 1992 (07.04.92) | 7-20 |
| A | FR 2505410 A (LE BOEDEC FRANCOIS) 12 November 1982 (12.11.82) | 7 |
| A | US 4370095 A (H.PRESCOTT SLEEPER, JR.) 25 January 1983 (25.01.83) | 7-10 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 April 1999 (23.04.99) | 27 May 1999 (27.05.99) |

| Name and mailing address of the ISA/ RU | Authorized officer |
|---|---|
| Facsimile No. | Telephone No. |

Form PCT/ISA/210 (second sheet) (July 1992)